(19) Europäisches Patentamt / European Patent Office / Office européen des brevets

(11) **EP 1 789 836 B1**

(12) **FASCICULE DE BREVET EUROPEEN**

(45) Date de publication et mention de la délivrance du brevet:
**21.10.2020 Bulletin 2020/43**

(21) Numéro de dépôt: **05796260.7**

(22) Date de dépôt: **05.08.2005**

(51) Int Cl.:
*G02C 7/06* *(2006.01)*    *G02C 7/02* *(2006.01)*

(86) Numéro de dépôt international:
**PCT/FR2005/002036**

(87) Numéro de publication internationale:
**WO 2006/027448 (16.03.2006 Gazette 2006/11)**

(54) **PROCEDE DE DETERMINATION D'UNE PAIRE DE LENTILLES OPHTALMIQUES PROGRESSIVES**

VERFAHREN ZUR BESTIMMUNG EINES PAARES PROGRESSIVER OPHTHALMISCHER LINSEN

METHOD FOR DETERMINATION OF A PAIR OF PROGRESSIVE OPHTHALMIC LENSES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.08.2004 FR 0409144**

(43) Date de publication de la demande:
**30.05.2007 Bulletin 2007/22**

(73) Titulaire: **Essilor International**
**94220 Charenton-le-Pont (FR)**

(72) Inventeurs:
• **PEDRONO, Claude**
  **F-91640 Briis-sous-Forges (FR)**
• **Granger-Donetti, Bérangère**
  **F-94227 Charenton Cédex (FR)**

(74) Mandataire: **Plasseraud IP et al**
**66, rue de la Chaussée d'Antin**
**75440 Paris Cedex 09 (FR)**

(56) Documents cités:
EP-A- 0 039 497    WO-A-01/46744
DE-A1- 4 414 106    GB-A- 2 130 391
US-B1- 6 286 957

**Description**

La présente invention a pour objet un procédé de détermination d'une paire de lentilles ophtalmiques progressives.

La prescription en matière ophtalmique peut comprendre une prescription d'astigmatisme. Une telle prescription est effectuée par l'ophtalmologiste sous la forme d'un couple formé d'une valeur d'axe (en degrés) et d'une valeur d'amplitude (en dioptries). Indépendamment de cette prescription d'astigmatisme, il peut être prescrit à un porteur une correction en puissance, positive ou négative. Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition représentative de l'incrément de puissance entre la vision de loin et la vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327 WO 01/46744 A et DE 44 14 106 A1.

Traditionnellement, les lentilles multifocales progressives comportent une face multifocale asphérique, par exemple la face opposée au porteur des lunettes, et une face sphérique ou torique, dite face de prescription. Cette face sphérique ou torique permet d'adapter la lentille à l'amétropie du porteur, prescrite par l'ophtalmologiste. La définition de la lentille se limite dans ce cas à la recherche d'une surface optimisée pour la face multifocale asphérique. Des méthodes de définition de la lentille par optimisation des caractéristiques surfaciques des lentilles sont décrites dans les documents précités.

La demande de brevet français déposée par la demanderesse sous le titre *Procédé de détermination d'une lentille ophtalmique utilisant une prescription d'astigmatisme en vision de loin et en vision de près* le 08.08.2003 sous le numéro 03 09787 décrit un procédé de détermination par optimisation d'une lentille ophtalmique. Ce procédé permet de définir une lentille en tenant compte des caractéristiques optiques et non plus surfaciques de la lentille. On considère à cette fin les caractéristiques d'un porteur moyen, notamment pour ce qui est de la position de la lentille devant l'œil du porteur, en termes de galbe, d'angle pantoscopique et de distance verre-oeil. EP-A-0 990 939 propose aussi de déterminer une lentille par optimisation en tenant compte des propriétés optiques et non plus surfaciques de la lentille.

Il est proposé, en particulier par les sociétés ZEISS et RODENSTOCK sous les références respectives Zeiss Individual et Impression ILT, de tenir compte, pour la définition de lentilles progressives, de la position réelle de la lentille devant l'œil du porteur. A cette fin, on procède à des mesures de la position de la lentille dans la monture choisie par le porteur. La mesure de la position de la lentille par rapport à l'œil du porteur est d'abord difficile à effectuer avec précision. Ensuite, l'optimisation s'effectue pour une position mesurée de la lentille devant l'œil du porteur; or il s'avère que la position de la monture varie en fonction du temps et ne peut être considérée comme constante pour un porteur donné. Du fait de ces deux facteurs, la prise en compte de la position de la lentille n'apporte pas au porteur un confort supplémentaire par rapport à des solutions ne prenant en considération que la position moyenne de la lentille.

La demanderesse commercialise, sous la marque VARILUX IPSEO une gamme de verres progressifs, qui sont définis en fonction du comportement œil-tête du porteur. Cette définition repose sur le constat que tout porteur, pour regarder différents points à une hauteur donnée dans l'espace objet, peut déplacer soit la tête, soit les yeux et que la stratégie de vision d'un porteur repose sur une combinaison des mouvements de la tête et des yeux. La stratégie de vision du porteur influe sur la largeur des champs sur la lentille. Ainsi, plus la stratégie de vision latérale du porteur fait intervenir un mouvement de la tête, moins la zone de la lentille balayée par le regard du porteur est large. Si le porteur bougeait uniquement la tête pour regarder différents points à une hauteur donnée de l'espace objet, son regard passerait toujours par le même point de la lentille. Le produit VARILUX IPSEO propose donc des lentilles différentes, pour un même couple amétropie-addition, en fonction de la stratégie de vision latérale du porteur.

C. Darras, Elements et réflexions d'optique physiologique, ERA eds, 1995, pages 129 et suivantes, indique que le point de fixation pour un porteur en vision de loin, est plus ou moins décalé par rapport au plan sagittal du côté de l'œil directeur. Le plan sagittal, dans ce contexte, est le plan médiateur du segment ayant pour extrémités les centres de rotation des yeux. La projection du point de fixation sur la ligne de base passant par le centre de rotation des yeux est appelée centre de regard. Du fait du décalage, le centre de regard n'est pas nécessairement confondu avec le point d'intersection du plan sagittal et de la ligne de base. Il n'est pas tirée de conséquence pratique de cette observation, autre que pour constater que la relation accommodation-convergence fait intervenir de nombreux éléments, que les recherches sont très difficiles et doivent être menées avec prudence et circonspection.

C. Porac et S. Coren, Sighting Dominance and Egocentric Localization, Vision Res., Vol. 26 no. 10, 1986, pp.1709-1713, mentionnent aussi que le point de référence pour la localisation visuelle se trouve entre le point milieu de l'axe interoculaire et la ligne de vision de l'œil directeur. Il n'est pas non plus tiré de conséquence pratique de ce constat.

J..S. Mansfield et G.E. Legge, The Binocular Computation of Visual Direction, Vision Res., Vol. 36 no. 1, 1995, pp.27-41, indiquent qu'une variation de contraste entre l'œil gauche et l'œil droit provoque un décalage latéral des directions de vision. Ce document suggère qu'un porteur au moins a un tel décalage latéral en l'absence de variation de contraste entre les 2 yeux.

Il existe toujours un besoin d'une lentille qui satisfasse mieux les porteurs.

L'invention propose en conséquence, dans un mode de réalisation, un procédé de détermination d'une paire de lentilles ophtalmiques pour un porteur selon la revendication 1, le procédé comprenant les étapes de:

- mesure du décalage en vision de près du plan sagittal du porteur, par rapport au plan sagittal standard;
- choix en fonction du décalage mesuré de valeurs cibles pour une optimisation en calcul optique dans les conditions du porté;
- détermination de la paire de lentille par optimisation en calcul optique dans les conditions du porté, à l'aide des valeurs de cibles choisies.

Dans un mode de mise en œuvre, l'étape de choix comprend:

- la fourniture de cibles dans l'espace objet, pour un porteur dont le plan sagittal est confondu avec le plan sagittal standard;
- le déplacement des cibles dans la zone de vision de près, avec un déplacement égal au décalage mesuré;
- le déplacement des cibles dans la zone de vision intermédiaire, avec un déplacement fonction de la hauteur dans l'espace objet et du décalage mesuré.

On peut encore prévoir une étape de calcul d'une méridienne de progression, avec

- la fourniture d'une méridienne de progression pour un porteur dont le plan sagittal est confondu avec le plan sagittal standard;
- la déformation de la méridienne de progression dans la zone de vision intermédiaire et dans la zone de vision de près, en fonction du décalage mesuré; l'étape de choix comprenant le choix de valeurs cibles en dehors de la méridienne.

L'étape de mesure peut encore comprendre la mesure de la position du plan sagittal du porteur pendant une tâche d'écriture, ou la mesure de la position du plan sagittal du porteur pendant une tâche de lecture. Dans un cas comme dans l'autre, on peut alors prévoir, pour une ligne de la tâche, la mesure de la position du plan sagittal moyen par rapport au centre de la ligne.

L'étape de mesure peut encore comprendre la mesure de la position du plan sagittal du porteur pendant une tâche de vision de près.

Dans un mode de mise en œuvre, la position du plan sagittal du porteur est estimée à partir d'une grandeur de la physiologie de la vision ou de la posture quantifiée, telle qu'une dominance visuelle ou une suppression en vision de près.

L'invention propose aussi une lentille obtenue par un tel procédé. Elle propose encore une paire de lentilles ophtalmiques multifocales progressives, chaque lentille présentant

- une zone de vision de loin et une zone de vision de près,
- des marques de repérage angulaire de la lentille et de repérage d'un point de référence de la zone de vision de près

dans laquelle la marque de repérage d'un point de référence de la zone de vision de près sur la lentille destinée à l'œil droit et la marque de repérage d'un point de référence de la zone de vision de près sur la lentille destinée à l'œil gauche sont dans des positions dissymétriques.

Pour cette paire de lentilles, dans les conditions du porté, les rayons provenant des yeux du porteur et passant par le point de référence pour la vision de près se coupent avantageusement en un point décalé par rapport au plan sagittal standard du porteur.

D'autres avantages et caractéristiques de l'invention apparaîtront à la lecture de la description qui suit des modes de réalisation de l'invention, donnés à titre d'exemple et en référence aux dessins qui montrent:

- figure 1, un schéma d'un système optique œil-lentille, en vue de dessus;
- figure 2, une représentation schématique des champs de vision de près, pour une lentille de l'état de la technique et pour un porteur standard;
- figure 3, une représentation schématique des champs de vision de près, pour une lentille de l'état de la technique et pour un porteur dont le plan sagittal est décalé par rapport au plan sagittal standard;
- figure 4, un schéma analogue à celui de la figure 1, montrant les champs de vision d'une lentille selon l'invention;
- figures 5 et 6, des ordinogrammes de modes de réalisation de l'invention;
- figures 7 à 10, des cartes de puissance porteur et d'astigmatisme résultant pour des lentilles gauche et droite de l'état de la technique;
- figures 11 à 14, des cartes similaires à celles des figures 7 à 10, pour des lentilles gauche et droite selon un mode de réalisation de l'invention;
- figures 15 et 16, des cartes similaires à celles des figures 8 et 10, avec des méridiennes calculées selon le mode de réalisation de la figure 6;
- figures 17 et 18, des représentations schématiques des marques de lentilles droite et gauche selon l'invention;
- figure 19, une représentation schématique d'un appareillage de mesure du décalage du plan sagittal pour un porteur;
- figure 20, un ordinogramme d'un procédé de mesure du décalage du plan sagittal; et

- figure 21, un graphe des ordonnées du plan sagittal relevées en fonction du temps.

L'invention propose de tenir compte, pour la détermination des lentilles ophtalmiques progressives, du décalage du plan sagittal du porteur en vision de près, par rapport au plan sagittal standard. Dans la suite, on appelle plan sagittal standard le plan médiateur du segment ayant pour extrémités les centres de rotation des yeux. On appelle plan sagittal le plan orthogonal à la ligne de base, qui passe par le point de fixation du regard, autrement dit par l'intersection de la direction du regard pour l'oeil gauche et de la direction du regard pour l'œil droit. La ligne de base est, comme indiqué plus haut, la ligne passant par les centres de rotation des yeux.

L'invention permet d'augmenter la largeur des champs de vision perçus par le porteur des lentilles. Les lentilles sont plus confortables à porter et permettent une stratégie oculomotrice plus naturelle ainsi qu'une meilleure vision latérale pour le porteur.

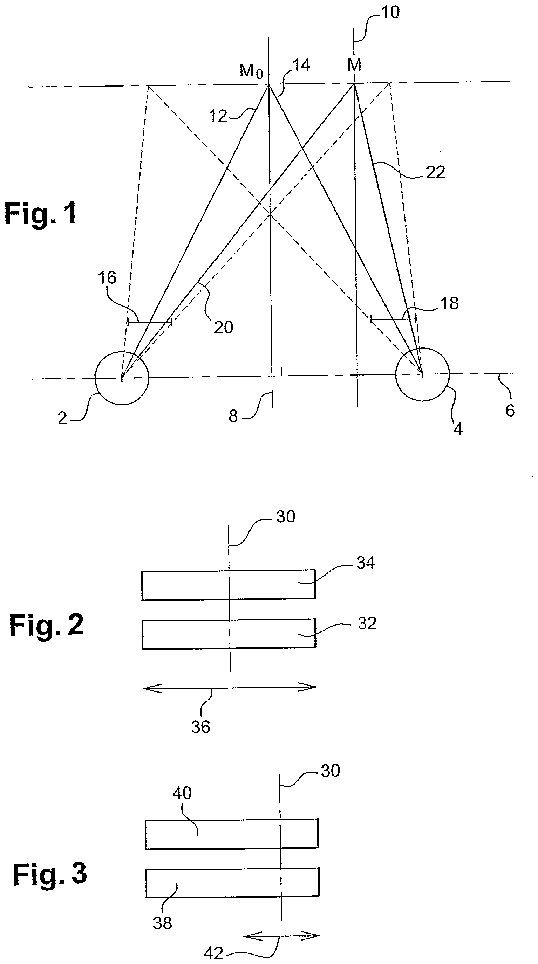

La figure 1 est une vue schématique des yeux d'un porteur, dans le plan comprenant les deux centres de rotation des yeux et un point M fixé en vision de près par un porteur. Sont représentés les yeux gauche 2 et droit 4, ainsi que leurs centres de rotation. La ligne de base 6 relie les centres de rotation des deux yeux. Le plan sagittal standard est référencé 8 sur la figure 1. On a représenté sur la figure 1 un point M de l'espace objet, en vision de près; le point M est défini comme l'intersection des directions du regard pour l'œil gauche et l'œil droit, lorsque le porteur regarde devant lui en vision de près. Comme le montre la figure, le point M ne se trouve pas dans le plan sagittal standard 8, mais est décalé sur la droite par rapport à ce plan sagittal standard. Le plan sagittal 10 est le plan perpendiculaire à la ligne de base 6 passant par le point M. Le décalage du plan sagittal par rapport au plan sagittal standard s'effectue le plus souvent vers l'œil directeur : l'exemple de la figure 1 correspond donc à un porteur ayant un œil droit directeur. Les tests pratiqués par la demanderesse montrent que le décalage entre le plan sagittal et le plan sagittal standard peut attendre la valeur du demi-écart pupillaire.

La figure 1 montre le point $M_0$ correspondant à un décalage nul, ainsi que les rayons 12 et 14 partant de l'œil droit et de l'œil gauche et passant par le point $M_0$. Ce point $M_0$ est situé sur le plan sagittal standard. Sont encore représentés les champs de vision de près 16 et 18 de deux lentilles adaptées respectivement aux yeux gauche et droit. Ces champs de vision sont représentés symboliquement et sont par exemple les zones des lentilles entourant la méridienne dans lesquelles l'astigmatisme résultant est inférieur à 0,5 dioptries; on appelle "astigmatisme résultant" le résultat de la combinaison entre l'astigmatisme total et l'astigmatisme de prescription. On pourrait considérer une autre définition des champs de vision. Dans une lentille de l'état de la technique, les zones de vision de près sont centrées sur la méridienne de chaque lentille; autrement dit, les rayons 12 et 14 traversent chaque lentille en passant par la méridienne, et les champs de vision de près 16 et 18 s'étendent de façon symétrique de part et d'autre des rayons 12 et 14. On a représenté par des traits en pointillés sur la figure 1 les limites latérales des champs de vision de près ainsi que les rayons 20 et 22 issus respectivement de l'œil gauche et de l'œil droit et passant par le point M.

La figure 2 montre symboliquement la perception des champs de vision par le porteur, dans l'exemple de la figure 1, en l'absence de décalage. On a représenté par un trait vertical 30 sur la figure 2 la perception qu'a le porteur de l'axe médian. Pour un décalage nul du plan sagittal par rapport au plan sagittal standard - exemple du point $M_0$ de la figure 1 -, les zones 32 et 34 représentent les champs de vision perçus par l'œil gauche et l'œil droit du porteur. En l'absence de décalage, comme expliqué plus haut, ces champs de visions sont symétriques de part et d'autre de l'axe médian, tant pour l'œil droit que pour l'œil gauche. La vision binoculaire du porteur est correcte dans l'ensemble des zones où la vision reste correcte pour l'œil droit comme pour l'œil gauche. Dans l'exemple, les zones 32 et 34 se recouvrent, la fusion est correcte sur toute la largeur des zones 32 et 34. La largeur du champ, telle que perçu par le porteur en vision de près, est égale à la largeur de la zone 32 et de la zone 34 et est représentée par la flèche 36 sur la figure 2. En d'autres termes, la fusion est effective sur toute la largeur du champ en vision de près.

La figure 3 est analogue à la figure 2, mais montre la perception des champs par un porteur pour lequel le plan sagittal est décalé. On a représenté de nouveau à la figure l'axe médian 30. Pour un porteur ayant un décalage du plan sagittal par rapport au plan sagittal standard - exemple du point M de la figure 1 -, l'axe médian passe par le point M. La zone 38 représente le champ de vision pour l'œil gauche; comme le montre la figure 1, il s'étend de façon dissymétrique par rapport à l'axe médian; plus précisément, il s'étend plus vers la gauche que vers la droite. La zone 40 représente le champ de vision pour l'œil droit; comme le montre la figure 1, la zone 40 s'étend aussi de façon dissymétrique par rapport à l'axe médian; toutefois, la majeure partie de la zone 40 s'étend vers la gauche. Il s'avère que le porteur perçoit un champ qui est nécessairement symétrique; autrement dit, le fait que le champ de vision s'étende largement sur la gauche n'est pas perçu par le porteur. Le champ dissymétrique de la figure 3 est perçu par le porteur comme un champ étroit, dont la limite est imposée par la limite du champ dans la partie droite. Le champ perçu par le porteur dont le plan sagittal est décalé est représenté par la flèche 42 sur la figure 3. La largeur de champ perçue par le porteur est donc d'autant plus faible que le décalage du plan sagittal par rapport au plan sagittal standard est important.

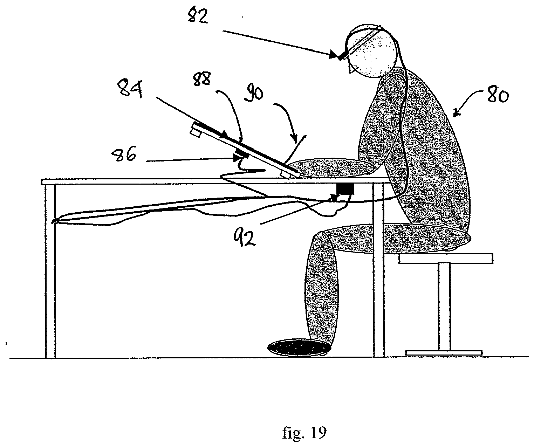

Les tests menés par la demanderesse démontrent que la valeur de décalage du plan sagittal par rapport au plan sagittal standard garde une valeur constante pour un porteur donné. Cette valeur de décalage peut être mesurée comme expliqué plus bas en référence aux figures 19 à 21.

L'invention propose de mesurer le décalage du plan sagittal d'un porteur, par rapport au plan sagittal standard et de déterminer une paire de lentille pour le porteur, en fonction du décalage mesuré. La détermination de la paire de lentille s'effectue par calcul optique; par rapport à un calcul classique, les cibles dans l'espace objet sont décalées du décalage latéral mesuré.

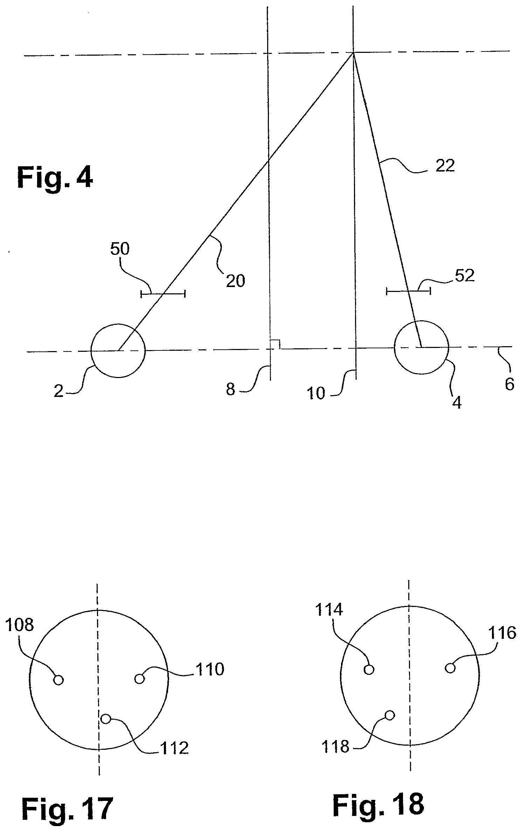

La figure 4 est une vue schématique analogue à la figure 1. On a représenté à la figure 4 les yeux 2 et 4, le plan sagittal standard 8 et le plan sagittal 10 décalé avec le point M ainsi que les rayons 20 et 22. La figure montre les champs de vision 50 et 52 pour l'œil gauche et l'œil droit. Comme les lentilles sont déterminées en fonction du décalage du plan sagittal, les champs de vision sont symétriques par rapport à l'axe médian perçu par le porteur. Les champs sont donc similaires à ceux représentés sur la figure 2; ils sont symétriques et le porteur perçoit donc un champ large, malgré le décalage du plan sagittal.

Les lentilles de l'invention peuvent être calculées par les méthodes décrites dans les demandes de numéro de dépôt 03 09787 et EP-A-0 990939 - en tenant compte du décalage du plan sagittal.

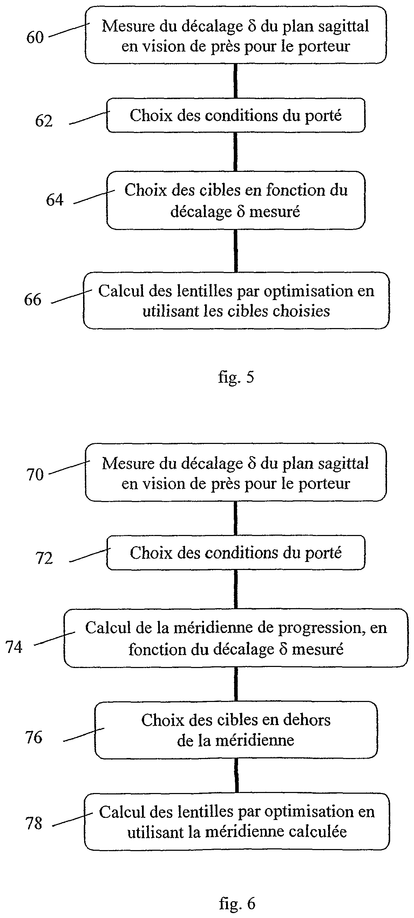

La figure 5 est un ordinogramme d'un premier mode de réalisation de l'invention. A l'étape 60, on mesure le décalage du plan sagittal pour le porteur; on peut utiliser le procédé décrit plus bas. A l'étape 62, on considère des conditions du porté données, qui peuvent être celles proposées dans les documents précités. A l'étape 64, on considère ensuite la valeur de décalage du plan sagittal mesurée pour le porteur et on détermine les cibles pour le décalage mesuré. Les cibles peuvent notamment être choisies de la façon suivante. En vision de loin, le point de référence est déterminé pour une vision à l'infini; l'influence du décalage n'est pas significative en vision de loin et est donc négligée. On considère donc en vision de loin les cibles utilisées dans les documents de l'état de la technique. En vision de près, on considère les valeurs des cibles des documents de l'état de la technique, mais on les décale dans l'espace objet, en fonction du décalage du plan sagittal. En d'autres termes, le point de référence en vision de près est déterminé par sa hauteur sur le verre ou par l'abaissement des yeux, par la distance du point fixé en vision de près et par le décalage du plan sagittal mesuré à l'étape 60. Par exemple, si le plan sagittal est décalé de 2 cm vers la droite, on décale de 2 cm vers la droite dans l'espace objet les cibles utilisées dans l'état de la technique pour la zone de vision de près. Dans la zone de vision intermédiaire, on peut appliquer aux cibles un décalage latéral linéaire, en fonction de la hauteur des points dans l'espace objet. Ceci revient à appliquer aux différentes cibles de l'espace objet la transformation suivante;

$x \rightarrow x$

$y \rightarrow y$

$z \rightarrow z$, pour les points d'ordonnée $y$ supérieure ou égale à zéro, qui correspondent aux points cibles en vision de loin;

$z \rightarrow z + \delta$, pour les points d'ordonnée $y$ inférieure ou égale à $y_0$, $y_0$ étant la hauteur du point de référence pour la vision de près, qui correspondent aux points cibles en vision de près; $\delta$ étant la valeur du décalage du plan sagittal mesuré pour le porteur;

$z \mapsto z + \dfrac{y}{y_0}\delta$, pour les points d'ordonnée $y$ comprise

entre 0 et $y_0$, qui correspondent

aux points cibles dans la zone de vision intermédiaire.

Dans cet exemple, on considère un système de coordonnées (x, y, z) qui est celui représenté à la figure 2 du document EP-A-0 990 939 : l'axe des z est parallèle à la ligne de base, l'axe des y est vertical et dirigé vers le haut et l'axe des x est dirigé vers le porteur, le repère étant orthonormé direct.

Cet exemple utilise les cibles de l'état de la technique. On peut aussi utiliser des cibles différentes, dès lors que le choix des cibles s'effectue en fonction du décalage du plan sagittal mesuré pour le porteur. En d'autres termes, le choix des cibles est tel que, dans la zone de vision de près, le milieu du champ de vision correspond à la direction du regard du porteur, vers des points du plan sagittal mesuré. Ceci a pour conséquence que les champs de vision sont symétriques par rapport à la direction du regard pour l'œil droit et pour l'œil gauche, lorsque le porteur regarde dans le plan sagittal.

A l'étape 66, on détermine par optimisation les lentilles gauche et droite, par calcul optique. Le calcul s'effectue dans les conditions du porté choisies à l'étape 62, en utilisant les cibles choisies à l'étape 64. Le calcul est un calcul optique, c'est-à-dire que l'on calcule, par exemple par tracé de rayons, la puissance perçue par le porteur dans les conditions du porté. On ne donne pas ici les détails du calcul par optimisation, qui peut s'effectuer suivant les procédés décrits dans les documents précités de l'état de la technique.

En d'autres termes, dans ce premier mode de réalisation, on simplifie le calcul de la méridienne en procédant à un décalage des cibles existantes et sans procéder à un calcul point par point. On interpole simplement les cibles entre les points de référence pour la vision de loin et pour la vision de près; la méridienne de progression est donc déduite de la méridienne de la lentille de l'état de la technique utilisée, sans qu'il ne soit nécessaire de procéder à un calcul point par point de la méridienne dans le plan sagittal du porteur.

La figure 6 est un ordinogramme d'un second mode de mise en œuvre de l'invention. Le procédé de la figure 6 diffère de celui de la figure 5 en ce qu'il prévoit un calcul spécifique de la méridienne; le procédé utilise une lentille de l'état de la technique. A l'étape 70, comme à l'étape 60 de la figure 5, on mesure le décalage du plan sagittal du porteur. A l'étape 72, on choisit les conditions du porté, comme à l'étape 62 de la figure 5. A l'étape 74, on détermine la méridienne, comme proposé dans les documents de l'état de la technique, en tenant compte du décalage du plan sagittal mesuré pour le porteur, ainsi que de l'ergorama propre au sujet. En d'autres termes, on procède à un calcul point par point de la méridienne. On obtient ainsi une méridienne décalée, c'est-à-dire un ensemble de directions du regard et de puissances optiques associées.

A l'étape 76, on choisit des cibles en dehors de la méridienne. Ensuite, à l'étape 78, on calcule les lentilles par optimisation, en utilisant les conditions du porté choisies ainsi que la méridienne calculée à l'étape 74.

Le procédé de la figure 5 présente l'avantage, par rapport à celui de la figure 6, de simplifier les calculs, en évitant de recalculer la méridienne de progression.

Le procédé de la figure 5 et celui de la figure 6 conduisent à des lentilles qui sont adaptées au décalage du plan sagittal mesuré sur le porteur. Les tests menés par la demanderesse montrent que les porteurs de lentilles selon l'invention perçoivent en vision de près un champ de vision plus large. Cette largeur du champ de vision se traduit par une meilleure fusion binoculaire et par un confort accru.

La solution de l'invention ne nécessite pas de mesures complexes ou délicates.

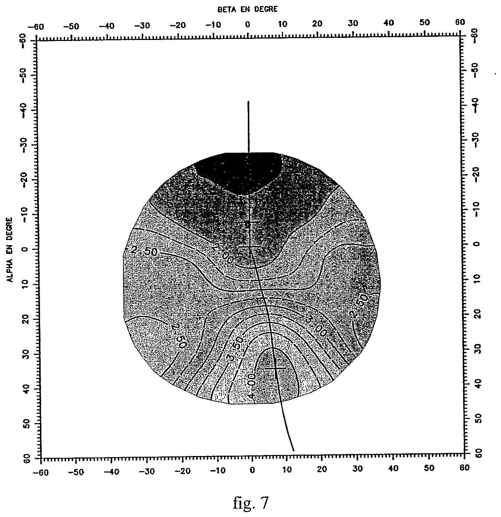

Les figures 7 à 16 montrent des exemples de lentilles de l'état de la technique et de lentilles obtenues selon le procédé de l'invention. Dans chacun des graphiques, on a représenté les puissances porteur ou l'astigmatisme résultant - les paramètres optiques - mesurés pour différentes directions $(\alpha, \beta)$ du regard du porteur. Comme expliqué dans les demandes précitées, les angles $\alpha$ et $\beta$ sont respectivement l'angle entre la direction du regard et un plan horizontal passant par le centre de rotation de l'œil et l'angle entre la direction du regard et un plan vertical passant par le centre de rotation de l'œil. sont représentées sur les figues les lignes d'isopuissance ou d'isoastigmatisme. Les exemples sont appliqués à un porteur présentant la prescription suivante:

- pour l'œil gauche, puissance prescrite en vision de loin 1,75 dioptries, addition 2,25 dioptries, astigmatisme nul;
- pour l'œil droit, puissance prescrite en vision de loin 1,5 dioptries, addition 2,25 dioptries, astigmatisme nul;

On considère un ergorama du genre décrit dans les demandes précédentes de l'état de la technique. La distance en vision de près entre l'espace objet et les lentilles du porteur est de 350 mm. On considère les conditions du porté standard moyennes suivantes :

- distance entre le centre de rotation de l'œil et la lentille : 27 mm;
- angle pantoscopique : 12°,
- galbe : 0°.

Dans les exemples, pour permettre une comparaison plus simple des lentilles gauche et droite, les valeurs de l'angle β ont été inversées pour l'œil gauche. Ceci a pour conséquence que la lentille pour l'œil gauche, au lien de présenter une méridienne incliné vers le côté nasal (vers la gauche sur la figure) dans la partie inférieure de la lentille, présente une méridienne inclinée vers la droite sur la figure dans la partie inférieure de la lentille.

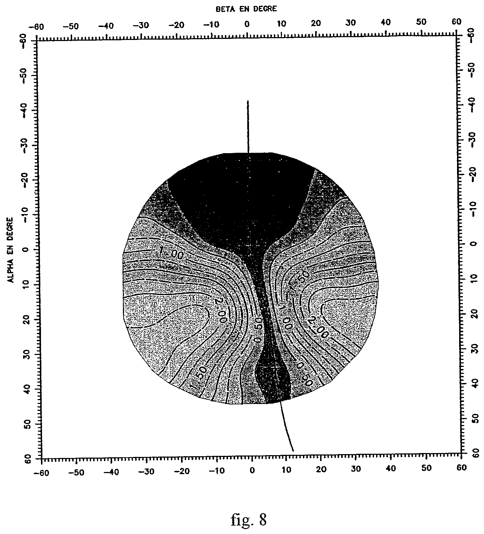

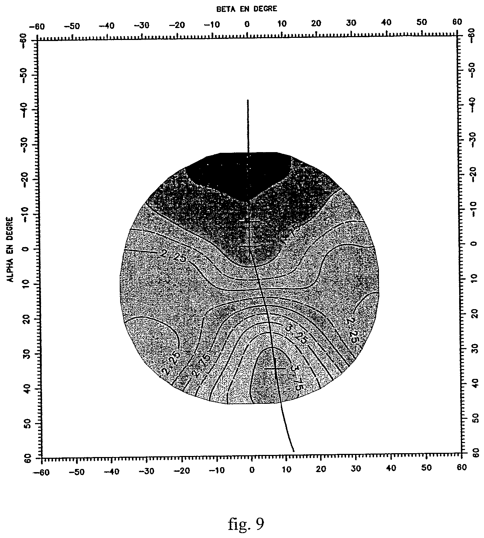

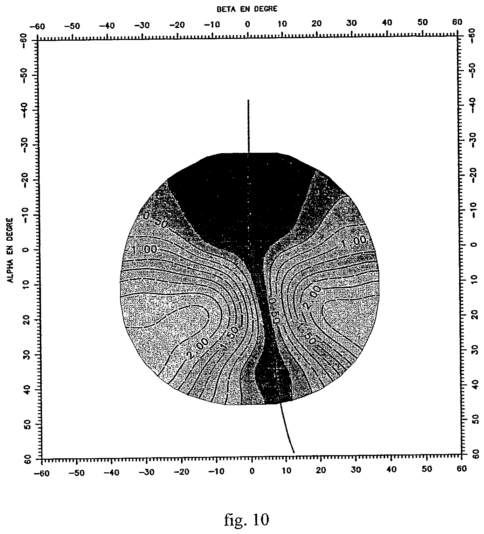

Les figures 7 à 10 montrent l'exemple de lentilles de l'état de la technique. On a représenté aux figures 7 et 9 les valeurs de puissance porteur pour la lentille gauche et la lentille droite; on a représenté aux figures 8 et 10 les valeurs d'astigmatisme résultant pour la lentille gauche et la lentille droite. On constate que la méridienne de progression est sensiblement identique dans les représentations des figures 7 et 8 d'une part et 9 et 10 d'autre part; ceci signifie que dans les lentilles gauche et droite, les méridiennes sont sensiblement symétriques.

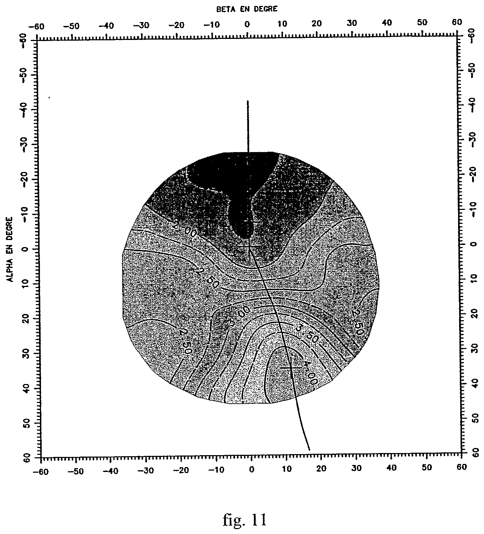

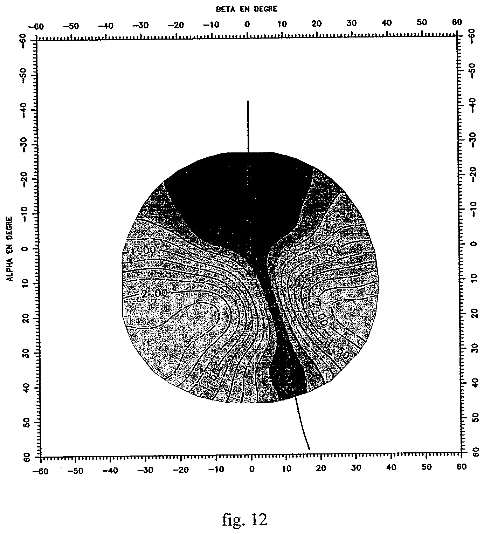

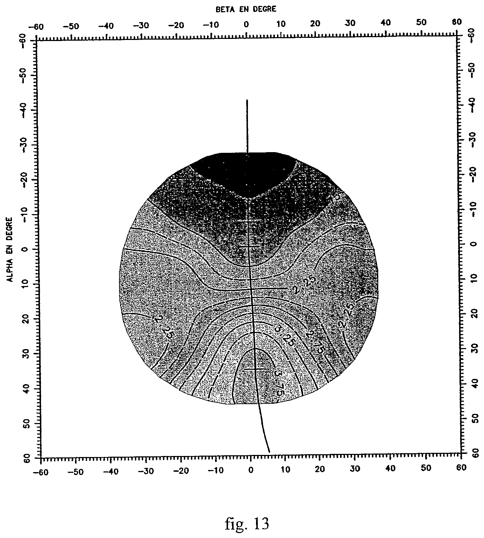

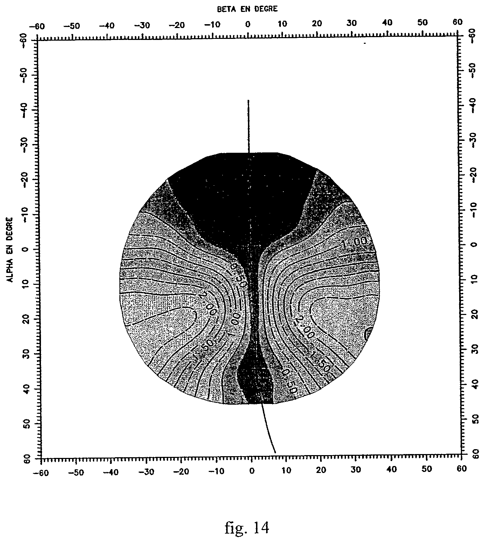

Les figures 11 à 14 sont des vues analogues à celles des figures 7 à 10, pour une lentille déterminée comme proposé dans le premier mode de réalisation de l'invention; le porteur présente un décalage de 25 mm du plan sagittal par rapport au plan sagittal standard; le plan sagittal est décalé vers l'œil droit. Ceci a pour conséquence que la méridienne de la lentille gauche est fortement inclinée vers le côté nasal; la méridienne des figures 11 et 12 est beaucoup plus inclinée vers la droite que ne l'est la méridienne des figures 7 et 8. En revanche, la méridienne de la lentille droite des figures 13 et 14 est moins inclinée vers la droite que la méridienne des figures 9 et 10.

On comprend que la lentille des figures 11 à 14 est plus adaptée au porteur présentant un décalage du plan sagittal que celle des figures 7 à 10, comme expliqué en référence aux figures 1 à 4.

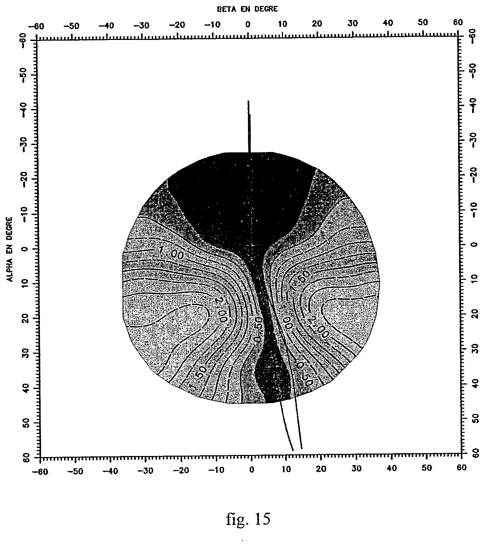

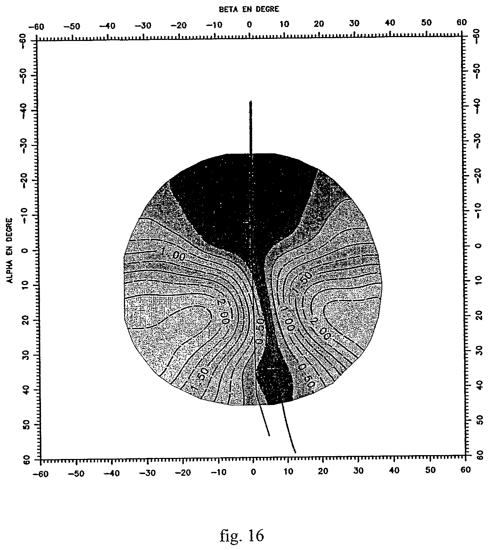

Les figures 15 et 16 montrent les figures 8 et 10, sur lesquelles on a porté les méridiennes obtenues selon le procédé de la figure 6. Ces méridiennes sont les courbes représentant l'impact sur les verres des lignes de visée des deux yeux en fonction de la hauteur du regard quand le sujet fixe des points dans son plan sagittal propre. Comme le montre la figure 15, en zone de vision de près, la méridienne obtenue selon l'invention pour l'œil gauche est plus proche du côté nasal que la méridienne de la lentille de l'état de la technique. Comme le montre la figure 16, en zone de vision de près, la méridienne obtenue selon l'invention pour l'œil droit est plus proche du côté temporal que la méridienne de la lentille de l'état de la technique.

Les figures montrent que les méridiennes obtenues par le procédé de la figure 6, représentées sur les figures 15 et 16, sont légèrement différentes de celles obtenues selon le procédé de la figure 5, représentées sur les figures 11 à 14.

Les figures 11 à 16 montrent que la lentille obtenue selon le procédé de l'invention se distingue de la lentille de l'état de la technique, par le décalage de la méridienne, qui n'est pas symétrique entre la lentille gauche et la lentille droite. Ceci peut se constater sur les lentilles fournies aux porteurs; en effet, sur les lentilles livrées par les fabricants de lentilles, on retrouve des marques de montage destinées aux opticiens et permettant de monter les lentilles dans les montures. Ces marques comprennent des marques permettant de repérer la position angulaire de la lentille; par exemple, on utilise des cercles gravés sur une ligne horizontale passant par le centre de la lentille. Les marques comprennent aussi une marque effaçable repérant le point de référence pour la vision de près. Dans une paire de lentilles selon l'invention, la marque du point de référence pour la vision de près ne pas symétrique sur la lentille gauche et sur la lentille droite.

Les figures 17 et 18 montrent des vues des lentilles droite et gauche, montrant les marques sur les lentilles. La figure 17 montre la lentille droite, avec les marques gravées 108 et 110 permettant le repérage angulaire de la lentille; la marque pour le point de référence pour la vision de près est référencée 112 sur la figure. La figure 18 est une vue analogue de la lentille gauche, les marques étant respectivement référencées 114, 116 et 118. On a représenté sur les figures en traits pointillés un axe vertical passant par le centre géométrique de la lentille. Les figures 17 et 18 montrent que la marque du point de référence pour la vision de près est quasiment en dessous du centre de la lentille droite; en revanche, la marque du point de référence pour la vision de près est fortement décalée du côté nasal sur la lentille gauche. L'exemple correspond donc à un décalage du plan sagittal vers l'œil droit, par rapport au plan sagittal standard. En outre, le décalage est assez important par rapport au demi-écart pupillaire, puisque le point de référence pour la vision de près est quasiment en dessous du centre géométrique de la lentille droite.

Les figures 17 et 18 montrent qu'il est simple de reconnaître des lentilles selon l'invention : les points de référence pour la vision de près sont dans des positions dissymétriques, à l'inverse de ce qui est le cas pour les lentilles de l'état de la technique. Plus précisément, les points de références sont décalés latéralement; ainsi, le point d'intersection des regards issus des yeux gauche et droit du porteur est décalé par rapport au plan sagittal standard.

On explique maintenant, en référence aux figures 19 à 21, comment mesurer le décalage du plan sagittal pour un porteur. Le procédé décrit en référence aux figures assure une mesure d'une grande précision et reproductible. Ce procédé n'est toutefois donné qu'à titre d'exemple, et l'on pourrait utiliser un autre procédé pour mesurer le décalage du plan sagittal. Le procédé de mesure repose sur le fait que le porteur, pour des tâches en vision de près comme l'écriture ou la lecture, centre le document sur son plan sagittal, pour maximiser son confort visuel. Il suffit donc de déterminer la position du document par rapport au plan sagittal standard pendant des tâches en vision de près pour connaître la position du plan sagittal propre au sujet. En outre, le procédé repose sur une hypothèse de comportement du porteur décrite dans la suite.

On utilise, pour la mesure du décalage du plan sagittal, l'appareillage décrit en référence à la figure 19. Cette figure montre le porteur dans les conditions de mesure. Comme le montre la figure 19, le porteur 80 est installé à une table; le porteur est équipé d'un capteur 82, qui est fixée sur sa tête, dans l'exemple de la figure 19 sur son front. Ce capteur fournit des informations de position et d'orientation et permet donc de repérer la position et l'orientation de la tête du porteur. On fournit au porteur une tablette 84 présentant aussi un capteur 86. La tablette 84 est apte à recevoir une feuille de papier 88 utilisée par le porteur pour le travail en lecture et en écriture. Le capteur 86 est du même type que le capteur 82; il permet donc de repérer la position et l'orientation dans l'espace de la tablette 84. On fournit aussi au porteur un stylo 90, qui est muni d'un troisième capteur permettant de situer des points particuliers de la tête ou du support pendant une phase de calibration. On peut utiliser, pour les capteurs 82 et 86 des capteurs magnétiques du genre fourni par la société Polhemus sous la référence 3Space Fastrrack. Ces capteurs fonctionnent avec une antenne 92, générant un champ magnétique.

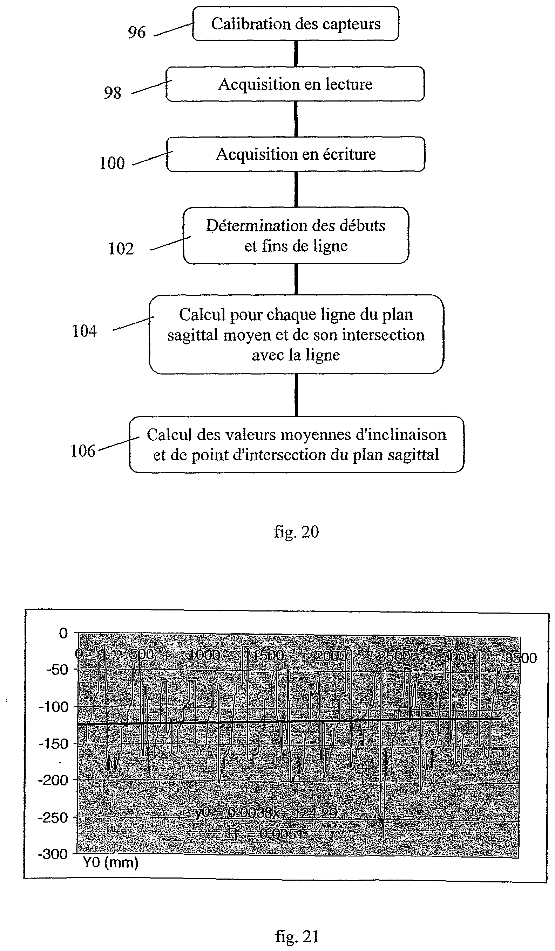

Le procédé est décrit en référence à la figure 20. A l'étape 96, on procède à la calibration de l'appareillage. A cette fin, on fixe le premier capteur sur la tête de l'opérateur et on lui fournit la tablette, avec un document préimprimé. On demande ensuite au porteur de pointer à l'aide du troisième capteur des points particuliers sur le document préimprimé. Ce pointé permet de repérer la position du document par rapport à la tablette, ou plus exactement la position du deuxième capteur par rapport au document. De la sorte, quel que soit ensuite le mouvement de la tablette, la position du document dans l'espace est connue avec précision. On détermine ensuite la position du premier capteur par rapport au plan sagittal standard; à cette fin, on détermine la position dans l'espace de la projection des pupilles dans le plan des lentilles du porteur. De la sorte, on détermine la position par rapport au premier capteur du plan sagittal standard du porteur.

Après cette phase de calibration, on procède à une acquisition pendant une tâche de lecture, ce qui est représenté à l'étape 98 de la figure 20. Cette tâche de lecture consiste simplement pour le porteur à lire un texte imprimé sur le document. Le texte est connu, et en particulier on connaît le nombre de lignes du texte, ainsi que la position du début et de la fin de chaque ligne du texte. Pendant la lecture, on relève continûment les signaux de position émis par les premier et deuxième capteurs.

On procède ensuite à une acquisition pendant une tâche d'écriture, ce qui est représenté à l'étape 100 de la figure 20; le cas échéant, on calibre de nouveau la position du document utilisé pendant l'écriture par rapport à la tablette. La tâche d'écriture consiste à répondre à un questionnaire sur plusieurs lignes prédéfinies, de sorte à remplir entièrement chacune des lignes. Le questionnaire se présente sous forme d'une série de questions, chacune suivie d'une ligne dans laquelle le porteur doit écrire la réponse. On relève ensuite le texte écrit, de sorte à déterminer, pour chaque ligne écrite, le début et la fin de la ligne. Pendant l'écriture, on relève continûment les signaux de position émis par les premier et deuxième capteurs.

Le procédé se poursuit par une étape d'analyse des résultats, représentée aux étapes 102 à 106 de la figure 20. On utilise par exemple un repère lié aux feuilles, dans lequel l'axe des ordonnées Y est parallèle à la base du document et dirigé vers la droite et l'axe des abscisses X est parallèle au grand côté du document; le centre du repère est au centre du document. A chaque instant, on peut calculer à partir des signaux émis par les capteurs la position du plan sagittal standard et, dans ce plan, la direction correspondant à une élévation nulle des yeux. On peut donc calculer à tout instant, l'intersection $(X_0, Y_0)$ de la direction d'élévation nulle des yeux dans le plan sagittal avec le document disposé sur la tablette fournie au porteur. La figure 21 montre l'allure des ordonnées $Y_0$ relevées au cours de la tâche d'écriture; on a représenté en ordonnées sur la figure 21 les variations de l'ordonnée $Y_0$ et en abscisses le temps. Le graphe de la figure montre que l'ordonnée $Y_0$ croît lentement, ce qui représente les variations de la direction du regard pendant une ligne d'écriture; ensuite, l'ordonnée $Y_0$ décroît brutalement, ce qui représente le retour à la ligne du regard. On observe ensuite une période de quasi-immobilité, de courte durée, qui correspond à la lecture de la question; pendant cette lecture, le parcours de la ligne s'effectue essentiellement avec un mouvement oculaire, de sorte que la tête de l'utilisateur ne bouge quasiment pas et que le premier capteur reste sensiblement immobile. L'allure du graphe se répète pour les différentes lignes d'écriture. Ceci confirme que le porteur parcourt chaque ligne grâce à un mouvement de tête. Plus spécifiquement, le porteur parcourt la ligne par des mouvements saccadés; qui sont suivis d'un mouvement de retour à la ligne. L'analyse du graphe de la figure 21 permet donc de déterminer les instants de début et de fin d'écriture pour chacune des lignes considérées.

Pour la tâche de lecture, il s'avère que le parcours d'une ligne se fait essentiellement par des mouvements oculaires, de sorte que les retours à la ligne ne sont pas toujours visibles. On peut néanmoins, connaissant les instants de début et de fin de lecture, faire l'hypothèse d'une vitesse de lecture constante et diviser les données acquises en autant de lignes qu'en comporte le document à lire.

A l'étape 102 de la figure 20, on détermine ainsi les instants de début et de fin de chacune des lignes lues ou écrites par le porteur.

A l'étape 104, on calcule, pour chacune des lignes déterminées à l'étape 102, la position du plan sagittal moyen pour la ligne, ainsi que l'intersection du plan sagittal moyen avec la ligne. On obtient, pour chaque ligne i, une équation du plan sagittal moyen du genre $y = a_i x + b_i$, suivant des axes x et y parallèles aux axes X et Y mentionnés plus haut, en utilisant une origine au centre chaque la ligne.

A l'étape 106, on calcule, pour les différentes lignes et pour les tâches d'écriture et de lecture, les valeurs statistiques des paramètres $a_i$ et $b_i$. La valeur statistique du paramètre b est représentative du décalage du plan sagittal pour l'utilisateur, par rapport au plan sagittal standard.

Le procédé décrit en référence aux figures 19 à 21 permet de déterminer la valeur du décalage du plan sagittal. Le fait de fournir au porteur une tablette mobile permet au porteur d'adopter une posture quelconque; la mesure n'est donc pas soumise à une contrainte de position imposée au porteur. Le fait d'utiliser à la fois des tâches de lecture et d'écriture rend la mesure plus fiable; les tests menés par la demanderesse démontrent que les valeurs du décalage en lecture et en écriture sont souvent proches. Considérer la valeur moyenne comme le propose le procédé décrit en référence aux figures 19 à 20 permet de déterminer des lentilles adaptées à la fois à des tâches de lecture et d'écriture.

Les tests menés par la demanderesse montrent que les valeurs de décalage du plan sagittal par rapport au plan sagittal standard sont stables dans le temps pour un même porteur. Ainsi, quatre séries de mesures à intervalles dune semaine permettent de retrouver des valeurs semblables du décalage, avec une erreur absolue inférieure ou égale à 3 mm.

L'invention n'est pas limitée aux modes de réalisation donnés à titre d'exemples. Ainsi, on peut utiliser d'autres procédés de mesure du décalage que celle qui est proposée en référence aux figures 19 à 21; ce procédé présente toutefois l'avantage de la simplicité et de la fiabilité. On a décrit en référence aux figures 5 et 6 un procédé de calcul des lentilles dans les conditions moyennes du porté; on pourrait aussi mesurer les conditions du porté, en particulier l'écart pupillaire, pour déterminer les lentilles.

## Revendications

1. Procédé de détermination d'une paire de lentilles ophtalmiques pour un porteur, comprenant les étapes de:

- mesure (60) du décalage en vision de près du plan sagittal du porteur (10), par rapport au plan sagittal standard (8);
Où:

■ le plan sagittal standard (8) est un plan perpendiculaire au segment (6) ayant pour extrémités les centres de rotation des yeux (2, 4) et passant par le milieu dudit segment;

et

▪ le plan sagittal du porteur (10) est un plan perpendiculaire audit segment et passant par le point de fixation du regard ; (M)

- choix (62) de conditions du porté pour la paire de lentilles par un porteur ;
- choix (64), en fonction du décalage mesuré pour le porteur, de valeurs cibles d'astigmatisme et de puissance pour une optimisation en calcul optique dans les conditions du porté choisies, les cibles d'astigmatisme et de puissance dans l'espace objet étant décalées dudit décalage mesuré et le choix des cibles d'astigmatisme et de puissance étant tel que, dans la zone de vision de près, le milieu du champ de vision correspond à la direction du regard du porteur vers des points du plan sagittal mesuré;
- détermination (66) de la paire de lentille par optimisation en calcul optique dans les conditions du porté, à l'aide des valeurs cibles d'astigmatisme et de puissance choisies,

**2.** Le procédé de la revendication 1, dans lequel l'étape (64) de choix comprend:

- la fourniture de cibles d'astigmatisme et de puissance dans l'espace objet, pour un porteur dont le plan sagittal est confondu avec le plan sagittal standard;
- le déplacement des cibles d'astigmatisme et de puissance dans la zone de vision de près, avec un déplacement égal au décalage mesuré;
- le déplacement des cibles d'astigmatisme et de puissance dans la zone de vision intermédiaire, avec un déplacement fonction de la hauteur dans l'espace objet et du décalage mesuré.

**3.** Le procédé de la revendication 1, dans lequel le procédé comprend en outre une étape de calcul d'une méridienne de progression, avec

- la fourniture d'une méridienne de progression pour un porteur dont le plan sagittal est confondu avec le plan sagittal standard;
- la déformation de la méridienne de progression dans la zone de vision intermédiaire et dans la zone de vision de près, en fonction du décalage mesuré;

l'étape de choix comprenant le choix de valeurs cibles d'astigmatisme et de puissance en dehors de la méridienne.

**4.** Le procédé de la revendication 1, 2 ou 3, dans lequel l'étape de mesure comprend la mesure de la position du plan sagittal du porteur pendant une tache d'écriture.

**5.** Le procédé de l'une des revendications 1 à 4, dans lequel l'étape de mesure comprend la mesure de la position du plan sagittal du porteur pendant une tâche de lecture.

**6.** Le procédé de la revendication 4 ou 5, dans lequel l'étape de mesure comprend, pour une ligne de la tâche, la mesure de la position du plan sagittal moyen par rapport au centre de la ligne.

**7.** Le procédé de l'une des revendications 1 à 6, dans lequel l'étape de mesure comprend la mesure de la position du plan sagittal du porteur pendant une tâche de vision de près.

**8.** Le procédé de l'une des revendications 1 à 6, dans lequel la position du plan sagittal du porteur est estimée a partir d'une grandeur de la physiologie de la vision ou de la posture quantifiée, telle qu'une dominance visuelle ou une suppression en vision de près.

**9.** Le procédé de l'une des revendications 1 à 8, dans lequel la paire de lentilles ophtalmiques est une paire de lentilles multifocales progressives, chaque lentille présentant

- une zone de vision de loin et une zone de vision de près,
- des marques de repérage angulaire de la lentille (108, 110, 114, 116) et de repérage d'un point de référence de la zone de vision de près dans laquelle la marque de repérage d'un point de référence de la zone de vision de près sur la lentille destinée à l'œil droit et la marque de repérage d'un point de référence de la zone de vision de près sur la lentille destinée à l'œil gauche occupent respectivement, relativement à un axe vertical passant par un centre géométrique de la lentille qui les porte, des positions qui sont dissymétriques.

**10.** Le procédé de la revendication 9, dans lequel, dans les conditions du porté, les rayons provenant des yeux du porteur et passant par le point de référence pour la vision de près se coupent en un point décalé par rapport au plan sagittal standard du porteur.

**Patentansprüche**

**1.** Verfahren zur Bestimmung eines Paares ophthalmischer Linsen für einen Träger, welches die Schritte umfasst:

- der Messung (60) der Verschiebung der Sagittalebene des Trägers (10) beim Sehen im Nahbereich in Bezug auf die standardmäßige Sagittalebene (8);

wobei:

• die standardmäßige Sagittalebene (8) eine Ebene ist, die senkrecht zu dem Segment (6) ist, dessen Enden die Drehpunkte der Augen (2, 4) sind, und die durch den Mittelpunkt dieses Segments verläuft; und
• die Sagittalebene des Trägers (10) eine Ebene ist, die senkrecht zu dem Segment ist und durch den Fixierungspunkt des Blickes (M) verläuft;

- der Wahl (62) von Bedingungen des Tragens für das Paar von Linsen durch einen Träger;
- der Wahl (64), in Abhängigkeit von der für den Träger gemessenen Verschiebung, von Zielwerten von Astigmatismus und Stärke für eine Optimierung bei der optischen Berechnung unter den gewählten Bedingungen des Tragens, wobei die Ziele von Astigmatismus und Stärke im Objektraum um die gemessene Verschiebung verschoben werden und die Wahl der Ziele von Astigmatismus und Stärke derart erfolgt, dass im Nahsichtbereich die Mitte des Gesichtsfeldes der Richtung des Blickes des Trägers zu Punkten der gemessenen Sagittalebene entspricht;
- der Bestimmung (66) des Linsenpaares durch Optimierung bei der optischen Berechnung unter den Bedingungen des Tragens mithilfe der gewählten Zielwerte von Astigmatismus und Stärke.

**2.** Verfahren nach Anspruch 1, wobei der Schritt (64) der Wahl umfasst:

- die Bereitstellung von Zielen von Astigmatismus und Stärke im Objektraum für einen Träger, dessen Sagittalebene mit der standardmäßigen Sagittalebene zusammenfällt;
- die Verlagerung der Ziele von Astigmatismus und Stärke im Nahsichtbereich, mit einer Verlagerung, die gleich der gemessenen Verschiebung ist:
- die Verlagerung der Ziele von Astigmatismus und Stärke im Zwischensichtbereich, mit einer Verlagerung, die von der Höhe im Objektraum und von der gemessenen Verschiebung abhängig ist.

**3.** Verfahren nach Anspruch 1, wobei das Verfahren außerdem einen Schritt der Berechnung eines Progressionsmeridians umfasst, mit:

- der Bereitstellung eines Progressionsmeridians für einen Träger, dessen Sagittalebene mit der standardmäßigen Sagittalebene zusammenfällt;

- der Verformung des Progressionsmeridians im Zwischensichtbereich und im Nahsichtbereich in Abhängigkeit von der gemessenen Verschiebung;

wobei der Schritt der Wahl die Wahl von Zielwerten von Astigmatismus und Stärke außerhalb des Meridians umfasst.

**4.** Verfahren nach Anspruch 1, 2 oder 3, wobei der Schritt der Messung die Messung der Position der Sagittalebene des Trägers während einer Schreibaufgabe umfasst.

**5.** Verfahren nach einem der Ansprüche 1 bis 4, wobei der Schritt der Messung die Messung der Position der Sagittalebene des Trägers während einer Leseaufgabe umfasst.

**6.** Verfahren nach Anspruch 4 oder 5, wobei der Schritt der Messung für eine Zeile der Aufgabe die Messung der Position der mittleren Sagittalebene in Bezug auf den Mittelpunkt der Zeile umfasst.

**7.** Verfahren nach einem der Ansprüche 1 bis 6, wobei der Schritt der Messung die Messung der Position der Sagittalebene des Trägers während einer Nahsichtaufgabe umfasst.

**8.** Verfahren nach einem der Ansprüche 1 bis 6, wobei die Position der Sagittalebene des Trägers anhand einer quantifizierten Größe der Physiologie des Sehens oder der Körperhaltung geschätzt wird, wie etwa einer visuellen Dominanz oder einer Unterdrückung beim Sehen im Nahbereich.

**9.** Verfahren nach einem der Ansprüche 1 bis 8, wobei das Paar ophthalmischer Linsen ein Paar progressiver Multifokallinsen ist, wobei jede Linse aufweist:

- einen Fernteil und einen Nahteil,
- Marken zur Winkelmarkierung der Linse (108, 110, 114, 116) und zur Markierung eines Referenzpunktes des Nahteils, wobei die Marke zur Markierung eines Referenzpunktes des Nahteils auf der für das rechte Auge bestimmten Linse und die Marke zur Markierung eines Referenzpunktes des Nahteils auf der für das linke Auge bestimmten Linse jeweils, bezogen auf eine durch einen geometrischen Mittelpunkt der Linse, welche sie trägt, verlaufende vertikale Achse, Positionen einnehmen, welche asymmetrisch sind.

**10.** Verfahren nach Anspruch 9, wobei unter den Bedingungen des Tragens die Strahlen, die von den Augen des Trägers kommen und durch den Referenzpunkt für die Nahsicht verlaufen, sich in einem Punkt schneiden, der bezüglich der standardmäßigen Sagittalebene des Trägers verschoben ist.

## Claims

1. Method for determining a pair of ophthalmic lenses for a wearer, comprising the steps of:

   - measurement (60) of the near-vision offset of the sagittal plane (10) of the wearer, with respect to the standard sagittal plane (8);
   where:

      ■ the standard sagittal plane (8) is a plane perpendicular to the segment (6) having for ends the rotation centres of the eyes (2, 4) and passing through the middle of said segment; and
      ■ the sagittal plane (10) of the wearer is a plane perpendicular to said segment and passing through the gaze fixation point (M);

   - selection (62) of donned conditions under which the pair of lenses will be worn by a wearer;
   - selection (64), depending on the offset measured for the wearer, of target astigmatism and power values for an optimization via optical calculation under the selected donned conditions, the astigmatism and power targets in the object space being offset by said measured offset and the selection of the astigmatism and power targets being such that, in the near-vision zone, the middle of the field of vision corresponds to the direction of the gaze of the wearer toward points of the measured sagittal plane;
   - determination (66) of the pair of lenses via optimization via optical calculation under the donned conditions, using the selected target astigmatism and power values.

2. Method according to Claim 1, wherein the selection step (64) comprises:

   - provision of astigmatism and power targets in the object space, for a wearer the sagittal plane of which is coincident with the standard sagittal plane;
   - movement of the astigmatism and power targets in the near-vision zone, with a movement equal to the measured offset;
   - movement of the astigmatism and power targets in the intermediate-vision zone, with a movement depending on the height in the object space and on the measured offset.

3. Method according to Claim 1, wherein the method furthermore comprises a step of computing a progression meridian, with

   - provision of a progression meridian for a wearer the sagittal plane of which is coincident with the standard sagittal plane;
   - deformation of the progression meridian in the intermediate-vision zone and in the near-vision zone, depending on the measured offset;

   the selection step comprising the selection of target astigmatism and power values off the meridian.

4. Method according to Claim 1, 2 or 3, wherein the measurement step comprises measurement of the position of the sagittal plane of the wearer during a writing task.

5. Method according to one of Claims 1 to 4, wherein the measurement step comprises measurement of the position of the sagittal plane of the wearer during a reading task.

6. Method according to Claim 4 or 5, wherein the measurement step comprises, for a line of the task, measurement of the position of the mean sagittal plane with respect to the centre of the line.

7. Method according to one of Claims 1 to 6, wherein the measurement step comprises measurement of the position of the sagittal plane of the wearer during a near-vision task.

8. Method according to one of Claims 1 to 6, wherein the position of the sagittal plane of the wearer is estimated from a quantified quantity of vision or posture physiology, such as a visual dominance or a near-vision suppression.

9. Method according to one of Claims 1 to 8, wherein the pair of ophthalmic lenses is a pair of progressive multifocal lenses, each lens having

   - a far-vision zone and a near-vision zone,
   - marks (108, 110, 114, 116) for angularly positioning the lens and for positioning a reference point of the near-vision zone, wherein the mark for positioning a reference point of the near-vision zone on the lens intended for the right eye and the mark for positioning a reference point of the near-vision zone on the lens intended for the left eye respectively occupy, relative to a vertical axis passing through a geometric centre of the lens that bears them, positions that are asymmetric.

10. Method according to Claim 9, wherein, under the donned conditions, rays coming from the eyes of the wearer and passing through the near-vision reference point intersect at a point offset with respect to the standard sagittal plane of the wearer.

**Fig. 1**

**Fig. 2**

**Fig. 3**

**Fig. 4**

50

20

52

22

2

8

10

4

6

**Fig. 17**

108

110

112

**Fig. 18**

114

116

118

60 — Mesure du décalage δ du plan sagittal en vision de près pour le porteur

62 — Choix des conditions du porté

64 — Choix des cibles en fonction du décalage δ mesuré

66 — Calcul des lentilles par optimisation en utilisant les cibles choisies

fig. 5

70 — Mesure du décalage δ du plan sagittal en vision de près pour le porteur

72 — Choix des conditions du porté

74 — Calcul de la méridienne de progression, en fonction du décalage δ mesuré

76 — Choix des cibles en dehors de la méridienne

78 — Calcul des lentilles par optimisation en utilisant la méridienne calculée

fig. 6

fig. 7

fig. 8

fig. 9

fig. 10

fig. 11

fig. 12

fig. 13

fig. 14

fig. 15

fig. 16

fig. 19

```
              ┌──────────────────────────────┐
         96 ──┤    Calibration des capteurs   │
              └──────────────────────────────┘
                            │
              ┌──────────────────────────────┐
         98 ──┤    Acquisition en lecture     │
              └──────────────────────────────┘
                            │
              ┌──────────────────────────────┐
        100 ──┤    Acquisition en écriture    │
              └──────────────────────────────┘
                            │
              ┌──────────────────────────────┐
              │   Détermination des débuts    │
        102 ──┤        et fins de ligne       │
              └──────────────────────────────┘
                            │
              ┌──────────────────────────────┐
              │  Calcul pour chaque ligne du plan │
        104 ──┤ sagittal moyen et de son intersection │
              │          avec la ligne        │
              └──────────────────────────────┘
                            │
              ┌──────────────────────────────┐
              │ Calcul des valeurs moyennes d'inclinaison │
        106 ──┤ et de point d'intersection du plan sagittal │
              └──────────────────────────────┘
```

fig. 20

fig. 21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- WO 0146744 A
- DE 4414106 A1
- EP 0990939 A

**Littérature non-brevet citée dans la description**

- **C. DARRAS.** Elements et réflexions d'optique physiologique. 1995, 129
- **C. PORAC ; S. COREN.** Sighting Dominance and Egocentric Localization. *Vision Res.,* 1986, vol. 26 (10), 1709-1713
- **J..S. MANSFIELD ; G.E. LEGGE.** The Binocular Computation of Visual Direction. *Vision Res.,* 1995, vol. 36 (1), 27-41